(19) Europäisches Patentamt
European Patent Office
Office européen des brevets

(11) **EP 1 879 403 B1**

(12) **EUROPEAN PATENT SPECIFICATION**

(45) Date of publication and mention
of the grant of the patent:
**14.08.2019 Bulletin 2019/33**

(51) Int Cl.:
**H04W 52/26** *(2009.01)*     *H04L 1/00 (2006.01)*
**H04W 72/00** *(2009.01)*

(21) Application number: **06817808.6**

(22) Date of filing: **13.11.2006**

(86) International application number:
**PCT/CN2006/003038**

(87) International publication number:
**WO 2007/062576 (07.06.2007 Gazette 2007/23)**

(54) **METHOD, SYSTEM AND BASE STATION FOR MULTIMEDIA BROADCAST/MULTICAST SERVICE**

VERFAHREN, SYSTEM UND BASISSTATION FÜR MULTIMEDIA-BROADCAST/MULTICAST-DIENST

PROCEDE, SYSTEME ET STATION DE BASE POUR SERVICE DE DIFFUSION MULTIMEDIA/MULTIDIFFUSION

(84) Designated Contracting States:
**AT BE BG CH CY CZ DE DK EE ES FI FR GB GR HU IE IS IT LI LT LU LV MC NL PL PT RO SE SI SK TR**

(30) Priority: **30.11.2005 CN 200510129230**

(43) Date of publication of application:
**16.01.2008 Bulletin 2008/03**

(73) Proprietor: **Huawei Technologies Co., Ltd.
Longgang District
Shenzhen, Guangdong 518129 (CN)**

(72) Inventor: **LI, Rongqiang
Shenzhen, Guangdong 518129 (CN)**

(74) Representative: **Körber, Martin Hans
Mitscherlich PartmbB
Patent- und Rechtsanwälte
Sonnenstrasse 33
80331 München (DE)**

(56) References cited:
WO-A-03/096149     WO-A2-2005/019978
CN-A- 1 666 454     US-A1- 2005 075 124
US-A1- 2005 113 099

## Description

## Field of the Technology

The present invention relates to radio communication technologies, and particularly, to a method, a system and a base station for implementing Multimedia Broadcast Multicast Service (MBMS).

## Background of the Invention

Broadcast and multicast are manners of transferring data from one data source to multiple users. In a conventional mobile network, a cell broadcast service allows low bit rate data to be sent to all the users through a cell shared broadcast channel. At present, phone services and message services are not been able to meet people's demand for mobile communications. Along with the rapid development of the Internet, there emerge a large number of multimedia services. In some application services, multiple users are able to receive the same data at the same time, e.g. video on demand, telecast, video conference, online education, and interactive games. Compared with ordinary data services, these multimedia services feature large data flow, long duration, and high sensitivity to time delay. For a most efficient use of the resources of a mobile network, the 3rd Generation Partnership Project (3GPP), which is a global standardization organization on Wideband Code Division Multiple Access (WCDMA) / Global System for Mobile communications (GSM), has put forward the MBMS. The MBMS means a point-to-multipoint service of transferring data from one data source to multiple users so as to share network resources including the resources of a mobile core network and an access network, especially the resources of an air interface. The MBMS defined by the 3GPP can implement not only low-rate multicast and broadcast of text-based messages, but also high-rate multicast and broadcast of multimedia services, which conforms with the future development of mobile data transmission.

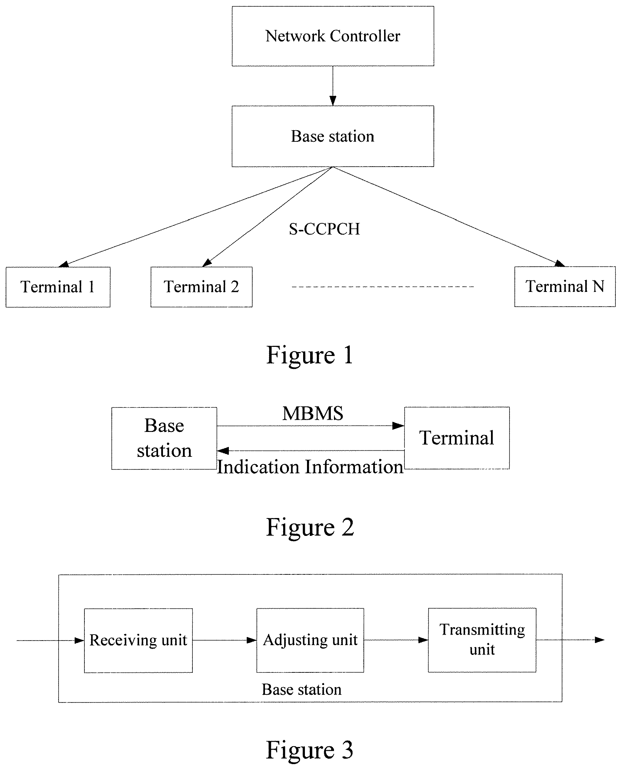

At present, the MBMS is transmitted in a radio manner over air interfaces according to downlink Secondary Common Control Physical Channel (S-CCPCH). As shown in Figure 1, the MBMS is transmitted over the S-CCPCH. All the MBMS users in a cell may receive the MBMS by means of coverage of the whole cell. In MBMS based on downlink S-CCPCH, a corresponding transport format is configured and an appropriate downlink spreading factor is selected according to the demand of the MBMS for transmission rate, and thus services of different rates, such as broadcast services of a fixed rate or variable rate, are supported. Moreover, an S-CCPCH allows the multiplexing of multiple MBMSs. The spreading factors supported by an S-CCPCH range from 256 to 4. In the case that the spreading factor equals to 4, the maximum information amount supported in each frame is 12720 bits, which is equivalent to that the maximum rate supported in a single S-CCPCH over an air interface can reach 1.272 Mbps. Suppose a code rate is 1/4, the service rate of MBMS of 318 Kbps may be supported. In addition, The MBMS based on a downlink S-CCPCH adopts open loop power control, in which the downlink transmit power of the S-CCPCH is to be determined according to the farthest distance of the coverage at cell edge, the poor propagation environment, and the requirement of MBMS for a receiving Signal-to-Noise Ratio. Therefore, a user of the cell may still demand the MBMS with certain access probability even if the user is at the cell edge.

As can be seen from the above, the MBMS based on the downlink S-CCPCH suffers from the following deficiencies: because MBMS is required to fully cover the whole cell, the transmission power is required according to the coverage at the cell edge no matter an MBMS user is far from or near to the base station, and thus power will be wasted easily. Moreover, because the closed loop power control is not adopted, high power is in need to confront a poor channel condition that a user may face and thus to acquire certain receiving satisfaction of users. Therefore, the power resources are wasted badly when there are fewer MBMS users.

Further, there are also the following deficiencies of the MBMS based on the downlink S-CCPCH.

After MBMS carried over an S-CCPCH is sent to MBMS users, the base station cannot acquire the receiving satisfaction of MBMS users fast and thus cannot adjust the receiving satisfaction of MBMS users by controlling the downlink transmission, and accordingly, the service guarantee of the MBMS is bad.

Because a limited service rate of MBMS is supported, and specifically, the service rate of MBMS will be far lower than 1 Mbps in consideration of the coverage of the whole cell, and thus there may be a certain bottleneck of transmission rate of the downlink S-CCPCH-based MBMS for future MBMS with a demand for multimedia of high quality.

The downlink S-CCPCH-based MBMS is not so flexible in providing Quality of Service (QoS) of a service and using the downlink resources, and does not bring the maximum value to operators. For example, if an operator adopts the S-CCPCH-based MBMS, it needs to implement full coverage of S-CCPCHs in the corresponding cell and perform allocation according to the definite code resources and power resources of the cell, according to service planning and deployment. These resources are relatively poor in sharing the resources with other downlink channels such as downlink dedicated channels. Moreover, there is no Hybrid Automatic Repeat Request (HARQ) scheme for the S-CCPCH. Therefore, the flexibility for reducing the power through retransmission delay is poor, and thus the tradeoff between the Quality of Service and the downlink resources of the service, and the diversification of Quality of Service cannot be provided.

US publication No. 2005/113099 A1 discloses a method for selecting a coding scheme according to link quality fed back by mobile stations. The coding scheme and the transmission power is two different facts for transmitting a MBMS message.

WO 03/096149 A discloses a method for adjusting transmission power which is based on DPCH to transmit a message. In this solution, the transmission power is adjusted according to transmit power control commands received from UEs. US publication No. 2005/0075124 A1 discloses a same method as disclosed in WO 03/096149.

## Summary of the Invention

The present invention provides a method, a system, and a base station for implementing Multimedia Broadcast Multicast Service (MBMS) so as to reduce the waste of power resources.

According to one aspect of the present invention, a method is provided, for implementing Multimedia Broadcast Multicast Service (MBMS), hereinafter referred to as MBMS. The method comprises: adjusting, by a base station, a downlink modulation scheme according to indication information fed back by terminals, wherein the downlink modulation scheme comprises transmission power, and the indication information fed back in uplink comprises data receiving performance, the data receiving performance comprises: an indication whether data have been received correctly or an indication indicating whether a user is satisfied with the receiving, wherein the step of adjusting comprises: determining actual satisfaction of MBMS users according to the data receiving performance periodically fed back by the terminals, wherein the actual satisfaction of MBMS users is the ratio of the number of indications whether data have been received correctly to the number of all the indications or the ratio of the number of indications whether a user is satisfied with the receiving to the number of all the indications; determining an adjustment value for transmission power according to the ratio of the number of indication of receiving data correctly to the number of all indications, or according to the ratio of the number of indications whether a user is satisfied with the receiving to the number of all indications, wherein this step comprises: setting a target ratio value, an upward adjusting step, and a downward adjusting step in advance; treating the difference between the last adjustment value and the downward adjusting step as the current adjustment value if the ratio of the number of indications whether data have been received correctly to the number of all indications is larger than the target ratio value; or if the ratio of the number of indications whether a user is satisfied with the receiving to the number of all the indications is larger than the target ratio value; and treating the sum of the last adjustment value and the upward adjusting step as the current adjustment value if the ratio of the number of indications whether data have been received correctly to the number of all the indications is less than the target ratio value, wherein the initial value of the adjustment value is zero; or if the ratio of the number of indications whether a user is satisfied with the receiving to the number of all the indications is less than the target ratio value; wherein the initial value of the adjustment value is zero; and adjusting the transmission power according to the determined adjustment value for transmission power, wherein this step comprises: treating the sum of the current transmission power and the adjustment value for transmission power as the transmission power adjusted; and transmitting MBMS to the terminals according to the downlink modulation scheme adjusted.

In implementations of the method, the data receiving performance can be ACK/NACK indicating whether data has been received correctly or HAPPY/UNHAPPY indicating whether an MBMS user is satisfied with the receiving.

In implementations of the method of the present invention:

Transmitting the MBMS to the terminals includes:

> transmitting the MBMS to the terminals over a downlink shared channel.
> The downlink shared channel includes: a downlink shared signaling channel and a downlink shared data channel; and
> transmitting the MBMS to the terminals over the downlink shared channel includes:
>
> > transmitting MBMS data over the downlink shared data channel to the terminals; and
> > transmitting an associated demodulation signaling of the downlink shared data channel to the terminals over the downlink shared signaling channel.

In implementations of the method of the present invention, the method further includes:
assigning an identical identifier of downlink shared signaling channel to all the MBMS users.

The downlink shared data channel is a High Speed-Physical Downlink Shared Channel (HS-PDSCH) and the downlink shared signaling channel is a High Speed - Share Control Channel (HS-SCCH).

The indication information indicating data receiving performance is fed back by the terminals to the base station through an uplink feedback channel.

The uplink feedback channel is a High Speed - Dedicated Physical Control Channel (HS-DPCCH).

The method further comprises: adjusting the transmission power according to channel quality indications, hereinafter referred to as CQIs, fed back by the terminals.

The adjusting the transmission power according to CQIs fed back by the terminals includes:
selecting a CQI from the CQIs fed back by the terminals according to a target ratio value, determining a second adjustment value for transmission power according to the CQI selected, and adjusting transmission power according to the determined second adjustment value for transmission power.

Determining the second adjustment value for transmission power according to the CQI selected includes:

treating the difference between a CQI corresponding to a fixed transport format and the CQI selected as the second adjustment value for transmission power.

The method further includes:

selecting a CQI from CQIs fed back by the terminals according to a target ratio value, and determining a transport format and the transmission power according to the CQI selected.

The selecting the CQI from the CQIs fed back by the terminals according to a target ratio value includes: sorting, by the base station, the CQIs fed back by the terminals in descending order according to the magnitudes of values, and selecting the CQI with the index number of the value of rounding down the product of the target ratio value and the number of all the CQIs.

According to another aspect of the present invention, a base station being capable of carrying MBMS is provided. The base station includes: a receiving unit capable of receiving the indication information fed back by the terminals and sending the indication information received; an adjusting unit capable of receiving the indication information sent from the receiving unit, adjusting the downlink modulation scheme according to the indication information, and sending the downlink modulation scheme adjusted; and a transmitting unit capable of receiving the downlink modulation scheme adjusted from the adjusting unit, modulating the MBMS to be transmitted according to the downlink modulation scheme received, and sending the MBMS modulated to the terminals, wherein the downlink modulation scheme comprises transmission power; the indication information comprises data receiving performance, wherein the data receiving performance is fed back periodically by the terminals; and the adjusting unit comprises: a first transmission power adjusting module capable of determining actual satisfaction of MBMS users according to the data receiving performance, wherein the actual satisfaction of MBMS users is the ratio of the number of indications whether data have been received correctly to the number of all the indications or the ratio of the number of indications whether a user is satisfied with the receiving to the number of all the indications, determining an adjustment value for transmission power according to the ratio of the number of indication of receiving data correctly to the number of all indications, or according to the ratio of the number of indications whether a user is satisfied with the receiving to the number of all indications, and adjusting the transmission power according to the determined adjustment value for transmission power; wherein the determining an adjustment value comprises: setting a target ratio value, an upward adjusting step, and a downward adjusting step in advance; treating the difference between the last adjustment value and the downward adjusting step as the current adjustment value if the ratio of the number of indications whether data have been received correctly to the number of all indications is larger than the target ratio value; or if the ratio of the number of indications whether a user is satisfied with the receiving to the number of all the indications is larger than the target ratio value; and treating the sum of the last adjustment value and the upward adjusting step as the current adjustment value if the ratio of the number of indications whether data have been received correctly to the number of all the indications is less than the target ratio value, wherein the initial value of the adjustment value is zero; or if the ratio of the number of indications whether a user is satisfied with the receiving to the number of all the indications is less than the target ratio value; wherein the initial value of the adjustment value is zero; and wherein the adjusting the transmission power comprises: treating the sum of the current transmission power and the adjustment value for transmission power as the transmission power adjusted.

In implementations of the base station of the present invention:

The indication information comprises CQIs; and the adjusting unit further includes: a second transmission power adjusting module capable of selecting the CQI that can achieve the target satisfaction of MBMS users according to the CQIs, determining a second adjustment value for transmission power according to the CQI selected, and adjusting the transmission power according to the second adjustment value for transmission power.

In implementations of the base station of the present invention:

The downlink modulation scheme further comprises transport format. The adjusting unit further includes: a modulation scheme adjusting module capable of selecting the CQI that can achieve the target satisfaction of MBMS users according to the CQIs, and adjusting the transport format and transmission power according to the CQI selected.

According to a third aspect of the present invention, a system for implementing Multimedia Broadcast Multicast Service (MBMS) is provided, the system includes a base station of the present invention or implementations of the present invention, and terminals capable of receiving MBMS and feeding back the indication information.

As can be seen from the above, the present invention has the following beneficial effects.

1) MBMS users may feed back indication information to a base station through an uplink feedback channel, and the base station may adjust the required transmission power or transport format in real time according to the indication information fed back by the MBMS users. Moreover, in most cases, there is a higher probability that an MBMS user is not at cell edge. Therefore, the base station does not need to perform the transmission by fixed power required by the coverage at cell edge. Thus, the actual downlink power for providing MBMS is saved and the power resources are used efficiently.

2) The base station may control the power according to the status of channel quality fed back by the MBMS users in real time, while the open loop power control of downlink S-CCPCH-based MBMS can perform transmission only according to the poorest channel quality. Therefore, the solution of the present invention has a more effective power control.

3) The base station may estimate the current satisfaction of MBMS users with the data receiving performance periodically fed back by the MBMS users, and perform real time
intervention according to a configuration policy of satisfaction of operator. Therefore, better guarantee of satisfaction of MBMS users is acquired, and an approach for the operator to provide different services of different MBMSs is provided.

4) In the present invention, the downlink transmission power may also be adjusted with a certain HARQ scheme and scheduling period so as to meet a certain demand for Quality of Service while the downlink S-CCPCH-based MBMS needs to adopt larger downlink transmission power to enable the data to be sent at good demodulation performance once for all.

5) The downlink shared channel-based MBMS, which is an extension of data transfer over a downlink shared channel for a single user, may provide the same data transfer to more users with the almost same downlink resources expended. Therefore, an approach for an operator to expand a "low-cost" service is provided.

6) The downlink shared channel based-MBMS may provide a very high service rate of MBMS, and specifically, the theoretic service peak rate of a downlink shared channel based service is far larger than the peak rate of an S-CCPCH-based service in the WCDMA standard Release 6.0.

7) In downlink shared channel-based MBMS, downlink resources may be shared. Specifically, a cell may "borrow" the downlink resources of the MBMS if no MBMS user applies for the MBMS for the moment, and the cell does not "returns" the downlink resources until an MBMS user sends a service request. Moreover, the surplus downlink resources of an MBMS may be shared with users other than the MBMS users when the channel quality is very good, or the MBMS users may "borrow" the downlink resources of other users when the channel quality is very poor. To sum up, the downlink shared channel may share the downlink resources completely. Therefore, MBMS providing high speed downlink is made possible.

The invention is defined by the method, the apparatus and the system of the independent claims.

## Brief Description of the Drawings

Figure 1 is a schematic diagram illustrating a downlink S-CCPCH based MBMS in the prior art.

Figure 2 is a schematic diagram illustrating the structure of an MBMS system in accordance with the present invention.

Figure 3 is a schematic diagram illustrating the structure of a base station in accordance with the present invention.

Figure 4 is a flow chart of the method for implementing MBMS with a variable transport format in accordance with embodiment 1 of the present invention.

Figure 5 is a flow chart for determining the transport format and transmission power of the downlink shared data channel of MBMS according to the CQIs fed back by MBMS users in accordance with embodiment 1 of the present invention.

Figure 6 is a flow chart for adjusting the transmission power of the downlink shared data channel of the MBMS according to the data receiving performance fed back by MBMS users in accordance with embodiment 1 of the present invention.

Figure 7 is a flow chart of a method for implementing MBMS with a fixed transport format in accordance with embodiment 2 of the present invention.

Figure 8 is a flow chart for adjusting the transmission power of the downlink shared data channel of MBMS according to the CQIs fed back by MBMS users in accordance with embodiment 2 of the present invention.

## Embodiments of the Invention

The present invention provides a method for implementing MBMS, including: a base station adjusts a downlink modulation scheme according to indication information fed back by terminals in an uplink and transmits the MBMS to the terminals according to the adjusted downlink modulation scheme.
The base station may carry MBMS over a downlink shared channel to perform radio transfer over an air interface, and terminals may feed back indication information to the base station over an uplink feedback channel. The downlink shared channel includes a downlink shared signaling channel and a downlink shared data channel. The downlink shared data channel is used for carrying MBMS while the downlink shared signaling channel provides demodulation signaling for the terminals to demodulate the associated downlink shared data channel. Moreover, in order to enable all MBMS users to share the downlink shared signaling channel, all the MBMS users are assigned an identical identifier of the downlink shared signaling channel so as to implement the point-to-multipoint transmission. Each MBMS user feeds back indication information such as a CQI and a data receiving performance indication to the base station through a terminal according to channel quality and data receiving performance. The base station adjusts a modulation scheme such as downlink transport format and transmission power according to the received indication information so as to save power resources, control and improve the Quality of Service of the MBMS in real time, and improve the bearer capabilities of the downlink shared channel-based MBMS. Moreover, technologies such as the HARQ may be adopted for an MBMS user to demodulate the data received so as to meet the demand for Quality of Service.

The present invention also provides an MBMS system corresponding to the method provided by the present invention. As shown in Figure 2, the MBMS system includes a base station and terminals. The terminals are used for receiving MBMS from the base station and feeding back indication information to the base station. The base station is used for receiving indication information fed back by the terminals, adjusting a downlink modulation scheme according to the indication information received, and sending the MBMS to the terminals according to the downlink modulation scheme adjusted.

As shown in Figure 3, the base station includes at least a receiving unit, a transmitting unit and an adjusting unit. The receiving unit is used for receiving indication information fed back by terminals and sending the indication information received to the adjusting unit. The adjusting unit is used for receiving the indication information from the receiving unit, adjusting a downlink modulation scheme according to the indication information received, and sending the downlink modulation scheme adjusted to the transmitting unit. The transmitting unit is used for receiving the downlink modulation scheme from the adjusting unit, modulating the MBMS to be transmitted according to the downlink modulation scheme received, and transmitting the modulated MBMS to the terminals.

The adjusting unit of the base station may further include a first transmission power adjusting module, a second transmission power adjusting module and a modulation scheme adjusting module. The first transmission power adjusting module is used for determining actual satisfaction of MBMS users according to data receiving performance received, determining an adjustment value for transmission power according to the actual satisfaction of MBMS users, and adjusting the transmission power according to the adjustment value for transmission power. The second transmission power adjusting module is used for selecting the CQI that can achieve the target satisfaction of MBMS users according to the CQI received, determining the adjustment value for transmission power according to the CQI selected, and adjusting the transmission power according to the adjustment value for transmission power. The modulation scheme adjusting module is used for selecting the CQI that can achieve the target satisfaction of MBMS users according to the CQI received, and adjusting the transport format and transmission power according to the CQI selected. The detailed adjusting process related to each of the above adjusting modules will be described in the following embodiments.

The present invention is applicable to all the downlink shared channel-based radio communication systems. For a clear demonstration of the solutions and merits of the present invention, the implementation of the present invention is described as follows with the High Speed Downlink Packet Access (HSDPA) technology defined in the WCDMA standard as an example.

The HSDPA, as a high-speed downlink packet access technology, was introduced into the 3GPP Release 5 specifications. The HSDPA is mainly with features that: a short frame of 2 ms is adopted, the HARQ and Adaptive Modulation and Coding (AMC) technologies is adopted in the physical layer, a higher order modulation of 16 Quadrature Amplitude Modulation (QAM) is introduced to improve the utilization rate of frequency spectrum, and the scheduling for the shared channels of users is implemented through code division and time division. The HARQ technology adopts a stop-and-wait (SAW) protocol, in which after the base station sends data to a user, the user is required to feed back a response, ACK / NACK, indicating whether the data is received correctly, and thus the base station may determine whether the data is required to be retransmitted. In the HSDPA, two physical channels are added into a downlink. One is a High Speed Physical Downlink Shared Channel (HS-PDSCH) for carrying the data information of a user. The other is a High Speed Shared Control Channel (HS-SCCH) for carrying the signaling required for demodulating the associated data channel HS-PDSCH. A data frame in the HS-SCCH is two time slots earlier than the corresponding data frame in the HS-PDSCH. In the HSDPA, one physical channel, in other words, a High Speed Dedicated Physical Control Channel (HS-DPCCH) for carrying and feeding back the receiving performance information of a data frame of the downlink HS-PDSCH, for example, ACK / NACK, and a downlink CQI, is added in uplink. A user indicates, for the base station, according to the quality of a current channel, a transport format allowed by the current channel under certain transmission power of the HS-PDSCH.

The transport format includes information such as the transport block size, modulation scheme and number of HS-PDSCH channelisation codes. The base station gives the instruction for the transport format of downlink data according to the CQI received.

Downlink shared signaling channel resources are first to be assigned to MBMS so as to guarantee the normal operation of the MBMS. A downlink shared signaling channel provides demodulation signaling for each MBMS user to demodulate an associated downlink shared data channel. In the present invention, the same identifier of downlink shared signaling channel is assigned to all the MBMS users so as to enable all the MBMS users to share the downlink shared signaling channel and implement the point-to-multipoint broadcast. Moreover, for improvement of the reliability of the signaling provided by downlink shared channel, the transmission power of the downlink shared signaling channel providing the MBMS with downlink signaling is under the control of the channel receiving quality of a MBMS user. For example, the transmission power of the downlink shared signaling channel of the MBMS is determined according to the poorest channel receiving quality of a MBMS user.

If an HSDPA technology is adopted, an HS-SCCH may provide signaling for demodulating an associated data channel. All the MBMS users are assigned a same user identity number. The user identity number as a Group - Radio Network Temporary Identity, G-RNTI, of the MBMS is equivalent to an H-RNTI in a standard protocol, used for distinguishing a MBMS user from a user demanding for other MBMS services and separate services. All the users belonging to the G-RNTI are assigned the same channelisation code and a scrambling code of downlink HS-SCCH. Thus, all the MBMS users can monitor a downlink shared signaling channel and determine whether there is an MBMS to be received in real time.

The present invention is hereinafter further described in detail with reference to the drawings and two specific embodiments. One of the embodiments is a method for implementing MBMS in a variable transport format while the other is a method for implementing MBMS in a fixed transport format.

Embodiment 1

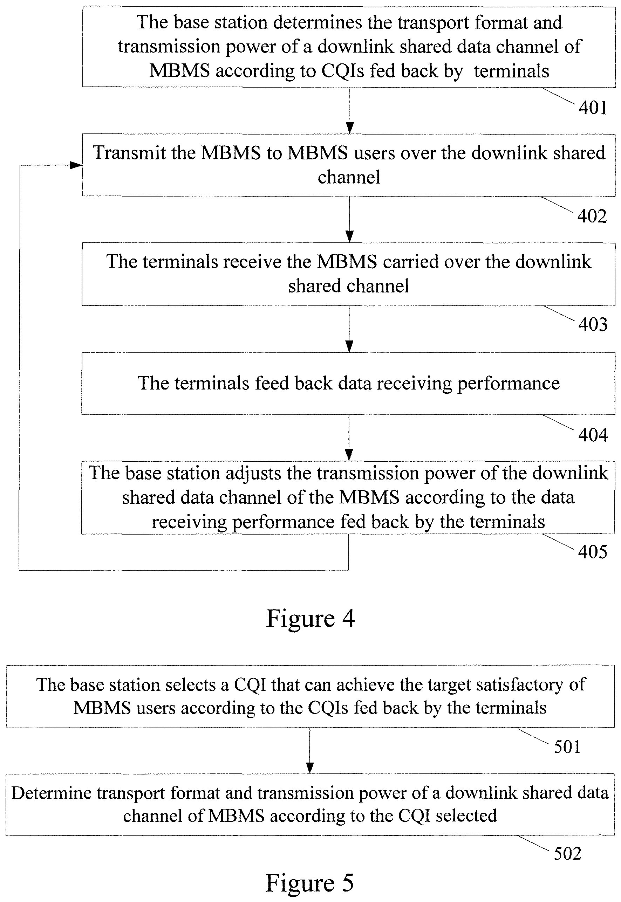

The variable transport format means that the transport format of downlink shared data channel for MBMS varies according to the CQIs fed back by terminals. As shown in Figure 4, an method for implementing MBMS in a variable transport format mainly includes the flowing processes.

Block 401: Determine the transport format and transmission power of downlink shared data channel for MBMS according to the CQIs fed back by terminals.

Each MBMS user periodically feeds back a CQI to a base station through a terminal according to the channel quality of the MBMS user. For example, the MBMS user feeds back the CQI through an HS-DPCCH in HSDPA. The base station determines the transport format and transmission power of the downlink shared data channel for the MBMS according to the CQIs fed back by the MBMS users in real time in each period.

Block 402: Transmit the MBMS over the downlink shared channel to the MBMS user according to the transport format and transmission power determined after the transport format and transmission power are determined.

The data of the MBMS are transmitted over the downlink shared data channel (such as an HS-PDSCH in HSDPA) while the signaling required for demodulating the associated data channel of the MBMS is transmitted over the downlink shared signaling channel (such as an HS-SCCH in HSDPA).

Block 403: The terminal determine whether there is data to be received at present by monitoring the downlink shared signaling channel (such as an HS-SCCH) in real time, and receives the corresponding MBMS in the downlink shared channel if there is data to be received at present by monitoring the downlink shared signaling channel.

Block 404: Each terminal feeds back the data receiving performance to the base station through an uplink feedback channel (such as an HS-DPCCH in HSDPA) according to the quality of the data received currently.

Block 405: The base station adjusts the transmission power of the downlink shared data channel of the MBMS according to the data receiving performance fed back by terminals.

After determining the transmission power of the downlink shared data channel of the MBMS according to the CQIs fed back by the MBMS users, the base station adjusts the transmission power according to the data receiving performance fed back by the MBMS users and treats the transmission power adjusted as the transmission power determined, and then return to Block 402, i.e. the base station transmits the MBMS according to the transmission power adjusted, so as to better meet the demands of the MBMS users. The initial value of the adjustment value for transmission power is 0. The MBMS is directly sent according to the transmission power determined in Block 401 when being sent for the first time. Once there is an online MBMS user, the transmission power is adjusted continually according to the adjustment value. The adjustment value is estimated according to the data receiving performance fed back by the MBMS users in real time, and then the MBMS is sent according to the transmission power adjusted. In general, the period for adjusting transmission power is the period for MBMS users to feed back data receiving performance.

In the process for performing the above processes, the base station starts to perform Block 401 again if the base station receives the current CQIs.

As shown in Figure 5, the detailed process of the operation of Block 401 includes:

Block 501: The base station selects a CQI that can achieve the target satisfaction of MBMS users according to the CQIs fed back by the terminals of MBMS users.

If there are N online MBMS users currently, the CQIs received by the base station are denoted as $CQI_1$, $CQI_2$, ..., and $CQI_N$, respectively. The target satisfaction of MBMS users preset by the operator is denoted as $T$ arg $et\_R_{sat}$. The $CQI_1$, $CQI_2$, ..., and $CQI_N$ are sorted in descending order according to the magnitudes of values, i.e. $Sort\_Descending\{CQI_1, CQI_2, ..., CQI_N\}$. The CQI corresponding to the index number, $\lfloor N \times T$ arg $et\_R_{sat} \rfloor$, is selected as the current CQI that can achieve the target satisfaction of MBMS users, $CQI_{ref}(t)$. $\lfloor \ \rfloor$ denotes the operation of rounding down.

The selection of $CQI_{ref}(t)$ is not limited to the above one solution.

Block 502: The base station determines the transport format and transmission power of an downlink shared data channel of MBMS according to the CQI selected, i.e., $CQI_{ref}(t)$.

The detailed operation of Block 401 may be implemented by a modulation scheme adjusting module.

How to specifically determine the transport format and transmission power according to a CQI is a part of the contents of the existing standard protocol and thus will not be described herein. For MBMS with certain demands for rate and time delay, the base station may meet the demands by assigning the times of sending downlink scheduling data.

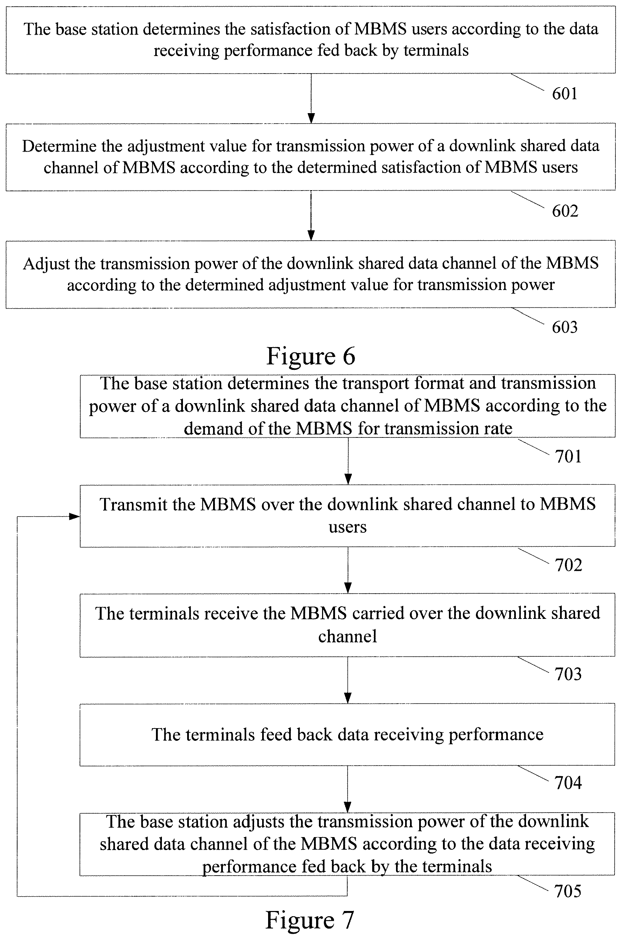

As shown in Figure 6, the detailed process of the operation of Block 405 includes:

Block 601: The base station determines actual satisfaction of MBMS users according to the data receiving performance fed back by the terminals.

If there are N online MBMS users currently, the data receiving performance received by the base station are denoted as $Rx_1$, $Rx_2$,..., and $Rx_N$. $Rx_i$, $i = (1,..., N)$ may be information indicating receiving performance, such as an indication indicating whether data has been received correctly, i.e. $ACK / NACK$, or an indication indicating whether an MBMS user is satisfied with the receiving, i.e. $HAPPY/UNHAPPY$. The ratio of the number of indications indicating receiving correctly to the number of all the indications,

$$R_{sat}(t) = \frac{\sum_{i=1}^{N} ACK}{N},$$

or the ratio of the number of indications indicating that MBMS users are satisfied with the receiving to the number of all the indications,

$$R_{sat}(t) = \frac{\sum_{i=1}^{N} HAPPY}{N},$$

is calculated and used for the actual satisfaction of MBMS users.

Block 602: The base station determines an adjustment value for transmission power of the downlink shared data channel for the MBMS according to the actual satisfaction determined of MBMS user.

The value of the adjustment value, $\Delta(t)$, is determined according to the actual satisfaction of MBMS users, $R_{sat}(t)$, and the target satisfaction of MBMS users preset by the operator, $T$ arg $et\_R_{sat}$. The initial value of $\Delta(t)$ is 0. If $R_{sat}(t) \leq T$ arg $et\_R_{sat}$, $\Delta(t)$ is determined according to a given upward adjusting step, $Up\_Power\_Step$, $\Delta(t) = \Delta(t - T) + Up\_Power\_Step$; if $R_{sat}(t) > T$ arg $et\_R_{sat}$, $\Delta(t)$ is determined according to a given downward adjusting step, $Down\_Power\_Step$, $\Delta(t) = \Delta(t - T) - Down\_Power\_Step$. $T$ is the period for adjusting the transmission power, and in generally, the period for terminals to feed back data receiving performance.

The determination of the adjustment value is not limited to the above one solution.

Block 603: The base station adjusts the transmission power of the downlink shared data channel for the MBMS according to the adjustment value determined for transmission power.

After the adjustment value, $\Delta(t)$, is acquired in Block 602, the base station adjusts the current transmission power by using $\Delta(t)$, and the transmission power adjusted is $P_{tx}(t) = P_{tx}(t - T) + \Delta(t)$. The base station treats the transmission power adjusted as the transmission power determined, and return to Block 402.

The detailed operation of Block 405 may be implemented by the first transmission power adjusting module.

Embodiment 2

The fixed transport format means that a transport format of a downlink shared data channel for MBMS is determined according to the demand of the MBMS for transmission rate and does not vary according to CQIs fed back by MBMS users. As shown in Figure 7, another method for implementing MBMS in a fixed transport format mainly includes the processes as follows.

Block 701: The transport format of the downlink shared data channel for the MBMS is determined according to the demand of the MBMS for transmission rate, and then suppose that the CQI corresponding to the transport format is denoted as a $CQI_{Req}$. The base station determines the transmission power of the downlink shared data channel for the MBMS, $P_{tx}(t)$, according to the $CQI_{Req}$.

How to determine the transmission power according to a CQI is a part of the contents of the existing standard protocol and thus will not be described herein.

Block 702: The base station transmits the MBMS over the downlink shared channel to the MBMS user according to the transport format and transmission power determined.

The data of the MBMS is transmitted over the downlink shared data channel (such as an HS-PDSCH) while the signaling required for demodulating the associated data channel of the MBMS is transmitted over the downlink shared signaling channel (such as an HS-SCCH).

Block 703: The terminals determine whether there is data to be received at present by monitoring the downlink shared signaling channel (such as an HS-SCCH) in real time, and receive the corresponding MBMS over the downlink shared channel if there is data to be received at present.

Block 704: The terminals feed back the data receiving performance to the base station through an uplink feedback channel (such as an HS-DPCCH) according to the data quality received currently.

Block 705: The base station adjusts the transmission power of the downlink shared data channel for the MBMS according to the data receiving performance fed back by the terminals.

After determining the transmission power of the downlink shared data channel for the MBMS according to Block 701, the base station adjusts the transmission power according to the data receiving performance fed back by MBMS users and treats the transmission power adjusted as the transmission power determined, and then return to Block 702, i.e. the base station transmits the MBMS according to the transmission power adjusted, so as to better meet the demands of the MBMS users. The initial value of the adjustment value for transmission power is 0. The MBMS is directly sent according to the transmission power determined in Block 701 when being sent for the first time. Once there is an online MBMS user, the transmission power is adjusted continually according to the adjustment value, which is estimated according to the data receiving performance fed back by the MBMS users in real time, and then the MBMS is sent according to the transmission power adjusted. In general, the period for adjusting the transmission power is the period for a terminal to feed back the data receiving performance.

The detailed operation of Block 705 is similar to Block 405 and thus will not be described herein.

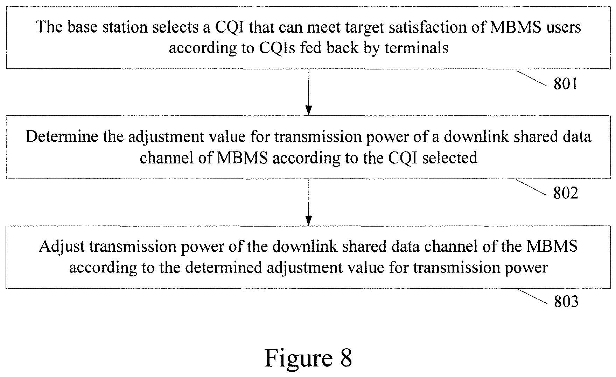

Further, the base station may further adjust the transmission power of the downlink shared data channel for the MBMS according to CQIs fed back by the terminals. This process may be implemented by the second transmission power adjusting module. As shown in Figure 8, adjusting the transmission power of the downlink shared data channel for the MBMS according to the CQIs fed back by the terminals specifically includes the processes as follows.

Block 801: The base station selects a CQI that can achieve target satisfaction of MBMS users, $CQI_{ref}(t)$, according to the CQIs fed back by the terminals.

The selection of the $CQI_{ref}(t)$ can be seen in Block 501 and will not be described herein.

Block 802: The base station determines the adjustment value for transmission power, $\Delta_0(t)$, according to the CQI selected, $CQI_{ref}(t)$, and the CQI corresponding to the fixed transport format, $CQI_{Req}$, i.e., $\Delta_0(t) = CQI_{Req} - CQI_{ref}(t)$. The initial value of $\Delta_0(t)$ is 0.

Block 803: The base station adjusts the current transmission power of the downlink shared channel for the MBMS according to the adjustment value determined for transmission power, $\Delta_0(t)$, and the transmission power adjusted is $P_{tx}(t) = P_{tx}(t - T_0) + \Delta_0(t)$.

The base station uses the transmission power adjusted for the transmission power determined, and return to Block 702. $T_0$ is the period for adjusting the transmission power according to the CQIs fed back by the MBMS users and is the same as the period for terminals to feed back the CQIs in general.

The adjustment of transmission power according to the CQIs fed back by the MBMS users and the adjustment of transmission power according to the data receiving performance fed back by the MBMS users are performed in parallel. Each adjustment is performed according to the result of the last adjustment.

It is to be noted that the method for a base station to adjust a downlink modulation scheme according to indication information fed back by terminals in accordance with the present invention is not limited to the above two embodiments. For example, the base station may also adjust the transmission power only according to the data receiving performance or CQIs fed back by the terminals, or the base station may also adjust the transport format only according to the CQIs fed back by the terminals.

To sum up, with the solutions provided by the present invention, a modulation scheme including transport format and transmission power may be adjusted according to indication information fed back by users in real time. Therefore, the power resources may be used efficiently and the downlink resources may be shared completely while the Quality of Service of the MBMS is guaranteed. Therefore, MBMS providing a high-speed downlink is made possible.

**Claims**

1.  A method for implementing Multimedia Broadcast Multicast Service, MBMS, **characterized in that** the method comprises:

    adjusting (405, 705), by a base station, a downlink modulation scheme according to indication information fed back by terminals, wherein the downlink modulation scheme comprises transmission power, and the indication information fed back in uplink comprises data receiving performance, the data receiving performance comprises: an indication whether data have been received correctly or an indication indicating whether a user is satisfied with the receiving, wherein the step of adjusting comprises:

    determining (601) actual satisfaction of MBMS users according to the data receiving performance periodically fed back by the terminals, wherein the actual satisfaction of MBMS users is the ratio of the number of indications whether data have been received correctly to the number of all the indications or the ratio of the number of indications whether a user is satisfied with the receiving to the number of all the indications;

determining (602) an adjustment value for transmission power according to the ratio of the number of indication of receiving data correctly to the number of all indications, or according to the ratio of the number of indications whether a user is satisfied with the receiving to the number of all indications, wherein this step (602) comprises: setting a target ratio value, an upward adjusting step, and a downward adjusting step in advance; treating the difference between the last adjustment value and the downward adjusting step as the current adjustment value if the ratio of the number of indications whether data have been received correctly to the number of all indications is larger than the target ratio value; or if the ratio of the number of indications whether a user is satisfied with the receiving to the number of all the indications is larger than the target ratio value; and treating the sum of the last adjustment value and the upward adjusting step as the current adjustment value if the ratio of the number of indications whether data have been received correctly to the number of all the indications is less than the target ratio value, wherein the initial value of the adjustment value is zero; or if the ratio of the number of indications whether a user is satisfied with the receiving to the number of all the indications is less than the target ratio value; wherein the initial value of the adjustment value is zero; and

adjusting (603) the transmission power according to the determined adjustment value for transmission power, wherein this step (603) comprises: treating the sum of the current transmission power and the adjustment value for transmission power as the transmission power adjusted;
and

transmitting (402, 702) MBMS to the terminals according to the downlink modulation scheme adjusted.

2. The method of Claim 1, **characterised in that** the data receiving performance is ACK/NACK indicating whether data have been received correctly or HAPPY/UNHAPPY indicating whether an MBMS user is satisfied with the receiving (601).

3. The method of Claim 1or 2, **characterised in that** the downlink shared channel comprises: a downlink shared signaling channel and a downlink shared data channel; and
transmitting (402, 702) the MBMS to the terminals over the downlink shared channel comprises:

transmitting MBMS data over the downlink shared data channel to the terminals; and transmitting an associated demodulation signaling of the downlink shared data channel to the terminals over the downlink shared signaling channel.

4. The method of Claim 3, **characterised in that** the method further comprises:
assigning an identical identifier of downlink shared signaling channel to all the MBMS users.

5. The method of Claim 3 or 4, **characterised in that** the downlink shared data channel is a High Speed-Physical Downlink Shared Channel, herein referred to as HS-PDSCH, and the downlink shared signaling channel is a High Speed - Share Control Channel, herein referred to as HS-SCCH.

6. The method of Claim 1, **characterised in that** the indication information indicating data receiving performance is fed back by the terminals to the base station through an uplink feedback channel.

7. The method of Claim 6, **characterised in that** the uplink feedback channel is a High Speed - Dedicated Physical Control Channel, herein referred to as HS-DPCCH.

8. The method of Claim 1, **characterized in that** the method further comprising:
adjusting (801, 802) the transmission power according to channel quality indications, hereinafter referred to as CQIs, fed back by the terminals.

9. The method of Claim 8, **characterised in that** adjusting (801, 802, 803) the transmission power according to CQIs fed back by the terminals comprises:
selecting (801) a CQI from the CQIs fed back by the terminals according to a target ratio value, determining (802) a second adjustment value for transmission power according to the CQI selected, and adjusting (803) transmission power according to the determined second adjustment value for transmission power.

10. The method of Claim 9, **characterised in that** determining (802) the second adjustment value for transmission power according to the CQI selected comprises:

treating the difference between a CQI corresponding to a fixed transport format and the CQI selected as the second adjustment value for transmission power.

11. The method of Claim 1, **characterised in that** the method further comprises:
selecting (501) a CQI from CQIs fed back by the terminals according to a target ratio value, and adjusting (502) a transport format and the transmission power according to the CQI selected.

12. The method of Claim 9 or 11, **characterised in that** the selecting (501) the CQI from the CQIs fed back by the terminals according to a target ratio value comprises:
sorting, by the base station, the CQIs fed back by the terminals in descending order according to the magnitudes of values, and selecting the CQI with the index number of the value of rounding down the product of the target ratio value and the number of all the CQIs.

13. A base station, **characterised in that** the base station comprises:

a receiving unit capable of receiving the indication information fed back by the terminals and sending the indication information received;
an adjusting unit capable of receiving the indication information sent from the receiving unit, adjusting (405, 705) the downlink modulation scheme according to the indication information, and sending the downlink modulation scheme adjusted; and
a transmitting unit capable of receiving the downlink modulation scheme adjusted from the adjusting unit, modulating the MBMS to be transmitted according to the downlink modulation scheme received, and sending (402, 702) the MBMS modulated to the terminals,
wherein the downlink modulation scheme comprises transmission power; the indication information comprises data receiving performance, wherein the data receiving performance is fed back (404, 704) periodically by the terminals; and the adjusting unit comprises:

a first transmission power adjusting module capable of determining (601) actual satisfaction of MBMS users according to the data receiving performance, wherein the actual satisfaction of MBMS users is the ratio of the number of indications whether data have been received correctly to the number of all the indications or the ratio of the number of indications whether a user is satisfied with the receiving to the number of all the indications, determining (602) an adjustment value for transmission power according to the ratio of the number of indication of receiving data correctly to the number of all indications, or according to the ratio of the number of indications whether a user is satisfied with the receiving to the number of all indications, and adjusting (603) the transmission power according to the determined adjustment value for transmission power;
wherein the determining (602) an adjustment value comprises: setting a target ratio value, an upward adjusting step, and a downward adjusting step in advance; treating the difference between the last adjustment value and the downward adjusting step as the current adjustment value if the ratio of the number of indications whether data have been received correctly to the number of all indications is larger than the target ratio value; or if the ratio of the number of indications whether a user is satisfied with the receiving to the number of all the indications is larger than the target ratio value; and treating the sum of the last adjustment value and the upward adjusting step as the current adjustment value if the ratio of the number of indications whether data have been received correctly to the number of all the indications is less than the target ratio value, wherein the initial value of the adjustment value is zero; or if the ratio of the number of indications whether a user is satisfied with the receiving to the number of all the indications is less than the target ratio value; wherein the initial value of the adjustment value is zero; and
wherein the adjusting (603) the transmission power comprises: treating the sum of the current transmission power and the adjustment value for transmission power as the transmission power adjusted.

14. The base station of Claim 13, **characterised in that** the indication information comprises CQIs; and the adjusting unit comprises:
a second transmission power adjusting module capable of selecting the CQI that can achieve the target satisfaction of MBMS users according to the CQIs, determining a second adjustment value for transmission power according to the CQI selected, and adjusting the transmission power according to the second adjustment value for transmission power.

15. The base station of Claim 14, **characterised in that** the downlink modulation scheme further comprises transport format; and the adjusting unit comprises:

a modulation scheme adjusting module capable of selecting the CQI that can achieve the target satisfaction of MBMS users according to the CQIs, and adjusting the transport format and transmission power according to the CQI selected.

16. The base station of Claim 13, **characterised in that** the downlink modulation scheme further comprises transport format; the indication information comprises CQIs; and the adjusting unit comprises:
a modulation scheme adjusting module capable of selecting the CQI that can achieve the target satisfaction of MBMS users according to the CQIs, and adjusting the transport format and transmission power according to the CQI selected.

17. A system for implementing Multimedia Broadcast Multicast Service, MBMS, **characterised in that** the system comprises a base station according to any one of claims 13-16 and terminals capable of receiving MBMS and feeding back the indication information.

**Patentansprüche**

1. Verfahren zum Implementieren eines Multimedia-Broadcast/Multicast-Dienstes (Multimedia Broadcast Multicast Service, MBMS), **dadurch gekennzeichnet, dass** das Verfahren umfasst:
Anpassen (405, 705), durch eine Basisstation, eines Downlink-Modulationsschemas gemäß einer Angabeinformation, die von Endgeräten zurückgegeben wird, wobei das Downlink-Modulationsschema eine Übertragungsleistung umfasst und die beim Uplink zurückgegebene Angabeinformation eine Datenempfangsleistung umfasst, wobei die Datenempfangsleistung umfasst: eine Angabe, ob Daten korrekt empfangen wurden, oder eine Angabe, die angibt, ob ein Benutzer mit dem Empfang zufrieden ist, wobei der Schritt des Anpassens umfasst:

Bestimmen (601) der tatsächlichen Zufriedenheit von MBMS-Benutzern gemäß der Datenempfangsleistung, die periodisch von den Endgeräten zurückgegeben wird, wobei die tatsächliche Zufriedenheit von MBMS-Benutzern das Verhältnis der Anzahl von Angaben, ob Daten korrekt empfangen wurden, zu der Anzahl aller Angaben bzw. das Verhältnis der Anzahl von Angaben, ob ein Benutzer mit dem Empfang zufrieden ist, zu der Anzahl aller Angaben ist;
Bestimmen (602) eines Anpassungswerts für die Übertragungsleistung gemäß dem Verhältnis der Anzahl der Angaben über den korrekten Empfang von Daten zur Anzahl aller Angaben bzw. gemäß dem Verhältnis der Anzahl der Angaben, ob ein Benutzer mit dem Empfang zufrieden ist, zu der Anzahl aller Angaben, wobei dieser Schritt (602) umfasst: Einstellen eines Verhältnissollwerts, eines Aufwärtsanpassungsschrittes und eines Abwärtsanpassungsschrittes im Voraus; Behandeln der Differenz zwischen dem letzten Anpassungswert und dem Abwärtsanpassungsschritt als den aktuellen Anpassungswert, wenn das Verhältnis der Anzahl der Angaben, ob Daten korrekt empfangen wurden, zu der Anzahl aller Angaben größer als der Verhältnissollwert ist; oder wenn das Verhältnis der Anzahl von Angaben, ob ein Benutzer mit dem Empfang zufrieden ist, zu der Anzahl aller Angaben größer als der Verhältnissollwert ist; und Behandeln der Summe des letzten Anpassungswerts und des Aufwärtsanpassungsschrittes als den aktuellen Anpassungswert, wenn das Verhältnis der Anzahl der Angaben, ob Daten korrekt empfangen wurden, zu der Anzahl aller Angaben kleiner als der Verhältnissollwert ist, wobei der Anfangswert des Anpassungswerts null ist; oder wenn das Verhältnis der Anzahl von Angaben, ob ein Benutzer mit dem Empfang zufrieden ist, zu der Anzahl aller Angaben kleiner als der Verhältnissollwert ist; wobei der Anfangswert des Anpassungswerts null ist; und
Anpassen (603) der Übertragungsleistung gemäß dem bestimmten Anpassungswert für die Übertragungsleistung, wobei dieser Schritt (603) umfasst: Behandeln der Summe der aktuellen Übertragungsleistung und des Anpassungswerts für die Übertragungsleistung als angepasste Übertragungsleistung; und
Übertragen (402, 702) eines MBMS an die Endgeräte gemäß dem angepassten Downlink-Modulationsschema.

2. Verfahren nach Anspruch 1, **dadurch gekennzeichnet, dass** die Datenempfangsleistung ACK/NACK ist, die angibt, ob Daten korrekt empfangen wurden, oder HAPPY/UNHAPPY ist, die angibt, ob ein MBMS-Benutzer mit dem Empfang zufrieden ist (601).

3. Verfahren nach Anspruch 1 oder 2, **dadurch gekennzeichnet, dass** der gemeinsam genutzte Downlink-Kanal umfasst: einen gemeinsam genutzten Downlink-Signalisierungskanal und einen gemeinsam genutzten Downlink-Datenkanal; und das Übertragen (402, 702) des MBMS an die Endgeräte über den gemeinsam genutzten Downlink-Kanal umfasst:

Übertragen von MBMS-Daten über den gemeinsam genutzten Downlink-Datenkanal an die Endgeräte; und
Übertragen einer zugeordneten Demodulationssignalisierung des gemeinsam genutzten Downlink-Datenkanals über den gemeinsam genutzten Downlink-Signalisierungskanal an die Endgeräte.

**4.** Verfahren nach Anspruch 3, **dadurch gekennzeichnet, dass** das Verfahren ferner umfasst: Zuweisen einer identischen Kennung des gemeinsam genutzten Downlink-Signalisierungskanals an alle MBMS-Benutzer.

**5.** Verfahren nach Anspruch 3 oder 4, **dadurch gekennzeichnet, dass** der gemeinsam genutzte Downlink-Datenkanal ein gemeinsam genutzter physischer Hochgeschwindigkeits-Downlink-Kanal, hierin als HS-PDSCH bezeichnet, und der gemeinsam genutzte Downlink-Signalisierungskanal ein gemeinsam genutzter Hochgeschwindigkeits-Steuerkanal, hierin als HS-SCCH bezeichnet, ist.

**6.** Verfahren nach Anspruch 1, **dadurch gekennzeichnet, dass** die Angabeinformation, die die Datenempfangsleistung angibt, von den Endgeräten über einen Uplink-Rückkanal zur Basisstation zurückgegeben wird.

**7.** Verfahren nach Anspruch 6, **dadurch gekennzeichnet, dass** der Uplink-Rückkanal ein dedizierter physischer Hochgeschwindigkeits-Steuerkanal ist, der hierin als HS-DPCCH bezeichnet wird.

**8.** Verfahren nach Anspruch 1, **dadurch gekennzeichnet, dass** das Verfahren ferner umfasst: Anpassen (801, 802) der Übertragungsleistung gemäß Kanalqualitätsangaben, nachfolgend als CQIs bezeichnet, die von den Endgeräten zurückgegeben werden.

**9.** Verfahren nach Anspruch 8, **dadurch gekennzeichnet, dass** das Anpassen (801, 802, 803) der Übertragungsleistung gemäß CQIs, die von den Endgeräten zurückgegeben werden, umfasst: Auswählen (801) einer CQI aus den von den Endgeräten zurückgegebenen CQIs gemäß einem Verhältnissollwert, Bestimmen (802) eines zweiten Anpassungswerts für die Übertragungsleistung gemäß der ausgewählten CQI und Anpassen (803) der Übertragungsleistung gemäß dem bestimmten zweiten Anpassungswert für die Übertragungsleistung.

**10.** Verfahren nach Anspruch 9, **dadurch gekennzeichnet, dass** das Bestimmen (802) des zweiten Anpassungswerts für die Übertragungsleistung gemäß der ausgewählten CQI umfasst: Behandeln der Differenz zwischen einer CQI, die einem festen Transportformat entspricht, und der als dem zweiten Anpassungswert für die Übertragungsleistung ausgewählten CQI.

**11.** Verfahren nach Anspruch 1, **dadurch gekennzeichnet, dass** das Verfahren ferner umfasst: Auswählen (501) einer CQI aus den von den Endgeräten zurückgegebenen CQIs gemäß einem Verhältnissollwert und Anpassen (502) eines Transportformats und der Übertragungsleistung gemäß der ausgewählten CQI.

**12.** Verfahren nach Anspruch 9 oder 11, **dadurch gekennzeichnet, dass** das Auswählen (501) der CQI aus den von den Endgeräten gemäß einem Zielverhältniswert zurückgegebenen CQIs umfasst: Sortieren, durch die Basisstation, der von den Endgeräten zurückgegebenen CQIs in absteigender Reihenfolge entsprechend den Größen der Werte und Auswählen der CQI mit der Indexnummer des Werts des Abrundens des Produkts aus dem Verhältnissollwert und der Anzahl aller CQIs.

**13.** Basisstation, **dadurch gekennzeichnet, dass** die Basisstation umfasst:

eine Empfangseinheit, die fähig ist, die von den Endgeräten zurückgegebene Angabeinformation zu empfangen und die empfangene Angabeinformation zu senden; eine Anpassungseinheit, die fähig ist, die von der Empfangseinheit gesendete Angabeinformation zu empfangen, das Downlink-Modulationsschema gemäß der Angabeinformation anzupassen (405, 705) und das angepasste Downlink-Modulationsschema zu senden; und

eine Übertragungseinheit, die fähig ist, das von der Anpassungseinheit angepasste Downlink-Modulationsschema zu empfangen, den zu übertragenden MBMS gemäß dem empfangenen Downlink-Modulationsschema zu modulieren und den modulierten MBMS an die Endgeräte zu senden (402, 702), wobei das Downlink-Modulationsschema eine Übertragungsleistung umfasst; die Angabeinformation eine Datenempfangsleistung umfasst, wobei die Datenempfangsleistung periodisch von den Endgeräten zurückgegeben wird (404, 704); und die Anpassungseinheit umfasst:

ein erstes Übertragungsleistungs-Anpassungsmodul, das fähig ist, die tatsächliche Zufriedenheit von MBMS-Benutzern gemäß der Datenempfangsleistung zu bestimmen (601), wobei die tatsächliche Zufriedenheit von MBMS-Benutzern das Verhältnis der Anzahl von Angaben, ob Daten korrekt empfangen wurden, zu der Anzahl aller Angaben bzw. das Verhältnis der Anzahl von Angaben, ob ein Benutzer mit dem Empfang zufrieden ist, zu der Anzahl aller Angaben ist, einen Anpassungswert für die Übertragungsleistung gemäß dem Verhältnis der Anzahl von Angaben über den korrekten Empfang von Daten zu der Anzahl aller Anzeigen bzw. gemäß dem Verhältnis der Anzahl der Angaben, ob ein Benutzer mit dem Empfang zufrieden ist, zu der Anzahl aller Angaben zu bestimmen (602) und die Übertragungsleistung gemäß dem bestimmten Anpassungswert für die Übertragungsleistung anzupassen (603);

wobei das Bestimmen (602) eines Anpassungswerts umfasst: Einstellen eines Verhältnissollwerts, eines Aufwärtsanpassungsschrittes und eines Abwärtsanpassungsschrittes im Voraus; Behandeln der Differenz zwischen dem letzten Anpassungswert und dem Abwärtsanpassungsschritt als den aktuellen Anpassungswert, wenn das Verhältnis der Anzahl der Angaben, ob Daten korrekt empfangen wurden, zu der Anzahl aller Angaben größer als der Verhältnissollwert ist; oder wenn das Verhältnis der Anzahl von Angaben, ob ein Benutzer mit dem Empfang zufrieden ist, zu der Anzahl aller Angaben größer als der Verhältnissollwert ist; und Behandeln der Summe des letzten Anpassungswerts und des Aufwärtsanpassungsschrittes als den aktuellen Anpassungswert, wenn das Verhältnis der Anzahl der Angaben, ob Daten korrekt empfangen wurden, zu der Anzahl aller Angaben kleiner als der Verhältnissollwert ist, wobei der Anfangswert des Anpassungswerts null ist; oder wenn das Verhältnis der Anzahl von Angaben, ob ein Benutzer mit dem Empfang zufrieden ist, zu der Anzahl aller Angaben kleiner als der Verhältnissollwert ist; wobei der Anfangswert des Anpassungswerts null ist; und wobei das Anpassen (603) der Übertragungsleistung umfasst: Behandeln der Summe der aktuellen Übertragungsleistung und des Anpassungswerts für die Übertragungsleistung als angepasste Übertragungsleistung.

14. Basisstation nach Anspruch 13, **dadurch gekennzeichnet, dass** die Angabeinformation CQIs umfasst; und die Anpassungseinheit umfasst:

ein zweites Übertragungsleistungs-Einstellmodul, das fähig ist, die CQI auszuwählen, die die Zielzufriedenheit von MBMS-Benutzern gemäß den CQIs erreichen kann, einen zweiten Anpassungswert für die Übertragungsleistung gemäß der ausgewählten CQI zu bestimmen und die Übertragungsleistung gemäß dem zweiten Anpassungswert für die Übertragungsleistung anzupassen.

15. Basisstation nach Anspruch 14, **dadurch gekennzeichnet, dass** das Downlink-Modulationsschema ferner ein Transportformat umfasst; und die Anpassungseinheit umfasst:

ein Modulationsschema-Anpassungsmodul, das fähig ist, die CQI auszuwählen, die die Zielzufriedenheit von MBMS-Benutzern gemäß den CQIs erreichen kann, und das Transportformat und die Übertragungsleistung entsprechend der ausgewählten CQI einzustellen.

16. Basisstation nach Anspruch 13, **dadurch gekennzeichnet, dass** das Downlink-Modulationsschema ferner ein Transportformat umfasst; die Angabeinformation CQIs umfasst; und die Anpassungseinheit umfasst:

ein Modulationsschema-Anpassungsmodul, das fähig ist, die CQI auszuwählen, die die Zielzufriedenheit von MBMS-Benutzern gemäß den CQIs erreichen kann, und das Transportformat und die Übertragungsleistung entsprechend der ausgewählten CQI einzustellen.

17. System zum Implementieren eines Multimedia-Broadcast/Multicast-Dienstes (MBMS), **dadurch gekennzeichnet, dass** das System eine Basisstation nach einem der Ansprüche 13 bis 16 und Endgeräte umfasst, die fähig sind, MBMS zu empfangen und die Anzeigeinformation zurückzugeben.

**Revendications**

1. Procédé pour mettre en oeuvre un service de multidiffusion de diffusion multimédia, MBMS, **caractérisé en ce que** le procédé consiste à :

ajuster (405, 705) avec une station de base un schéma de modulation de liaison descendante en fonction d'informations d'indication renvoyées par des terminaux, dans lequel le schéma de modulation de liaison descendante comprend une puissance de transmission, et les informations d'indication renvoyées dans la liaison montante comprennent des performances de réception de données, les performances de réception de données comprenant : une indication si des données ont été reçues correctement ou une indication indiquant si un utilisateur est satisfait de la réception, dans lequel l'étape d'ajustement consiste à :

déterminer (601) une satisfaction réelle des utilisateurs MBMS en fonction des performances de réception de données périodiquement renvoyées par les terminaux, dans lequel la satisfaction réelle des utilisateurs MBMS est le rapport entre le nombre d'indications si les données ont été reçues correctement et le nombre de toutes les indications, ou le rapport entre le nombre des indications si un utilisateur est satisfait de la réception et le nombre de toutes les indications ;

déterminer (602) une valeur d'ajustement pour la puissance de transmission en fonction du rapport entre le nombre d'indications si les données ont été reçues correctement et le nombre de toutes les indications ou en fonction du rapport entre le nombre des indications si un utilisateur est satisfait de la réception et le nombre de toutes les indications, dans lequel cette étape (602) consiste à : définir une valeur de rapport cible, une étape d'ajustement ascendante et une étape d'ajustement descendante à l'avance ; traiter la différence entre la dernière valeur d'ajustement et l'étape d'ajustement descendante comme la valeur d'ajustement courante si le rapport entre le nombre d'indications si les données ont été reçues correctement et le nombre de toutes les indications est supérieur à la valeur de rapport cible ; ou si le rapport entre le nombre des indications si un utilisateur est satisfait de la réception et le nombre de toutes les indications est supérieur à la valeur de rapport cible ; et traiter la somme de la dernière valeur d'ajustement et de l'étape d'ajustement montante comme la valeur d'ajustement courante si le rapport entre le nombre d'indications si les données ont été reçues correctement et le nombre de toutes les indications est inférieur à la valeur de rapport cible, la valeur initiale de la valeur d'ajustement étant zéro ; ou si le rapport entre le nombre des indications si un utilisateur est satisfait de la réception et le nombre de toutes les indications est inférieur à la valeur de rapport cible, la valeur initiale de la valeur d'ajustement étant zéro ; et ajuster (603) la puissance de transmission en fonction de la valeur d'ajustement déterminée pour la transmission de puissance, dans lequel cette étape (603) consiste à : traiter la somme de la puissance de transmission courante et de la valeur d'ajustement pour la puissance de transmission comme la puissance de transmission ajustée ; et

transmettre (402, 702) les MBMS aux terminaux en fonction du schéma de modulation de liaison descendante ajusté.

2. Procédé selon la revendication 1, **caractérisé en ce que** les performances de réception de données sont ACK/NACK indiquant si les données ont été reçues correctement ou HAPPY/UNHAPPY indiquant si un utilisateur MBMS est satisfait de la réception (601).

3. Procédé selon la revendication 1 ou 2, **caractérisé en ce que** le canal partagé de liaison descendante comprend : un canal de signalisation partagé de liaison descendante et un canal de données partagé de liaison descendante ; et

la transmission (402, 702) de MBMS aux terminaux sur le canal partagé de liaison descendante consiste à :

transmettre des données MBMS sur le canal de données partagé de liaison descendante aux terminaux ; et

transmettre une signalisation de démodulation associée du canal de données partagé de liaison descendante aux terminaux sur le canal de signalisation partagé de liaison descendante.

4. Procédé selon la revendication 3, **caractérisé en ce que** le procédé consiste en outre à : attribuer un identifiant identique du canal de signalisation partagé de liaison descendante à tous les utilisateurs MBMS.

5. Procédé selon les revendications 3 ou 4, **caractérisé en ce que** le canal de données partagé de liaison descendante est un canal partagé de liaison descendante physique à grande vitesse, ci-après HS-PDSCH, et le canal de signalisation partagé de liaison descendante est un canal de commande de partage à grande vitesse, ci-après HS-SCCH.

6. Procédé selon la revendication 1, **caractérisé en ce que** les informations d'indication indiquant des performances de réception de données sont renvoyées par les terminaux à la station de base via un canal de retour de liaison montante.

7. Procédé selon la revendication 6, **caractérisé en ce que** le canal de retour est un canal de commande physique dédié à grande vitesse, ci-après HS-DPCCH.

8. Procédé selon la revendication 1, **caractérisé en ce que** le procédé consiste en outre à :
ajuster (801, 802) la puissance de transmission en fonction d'indications de qualité de canal, ci-après CQI, renvoyées par les terminaux.

9. Procédé selon la revendication 8, **caractérisé en ce que** l'ajustement (801, 802, 803) de la puissance de transmission en fonction des CQI renvoyées par les terminaux consiste à :
choisir (801) une CQI parmi les CQI renvoyées par les terminaux en fonction d'une valeur de rapport cible, déterminer (802) une seconde valeur d'ajustement de la puissance de transmission en fonction de la CQI choisie, et ajuster (803) la puissance de transmission en fonction de la seconde valeur d'ajustement déterminée pour la puissance de transmission.

**10.** Procédé selon la revendication 9, **caractérisé en ce que** déterminer (802) la seconde valeur d'ajustement de la puissance de transmission en fonction de la CQI choisie consiste à :

traiter la différence entre une CQI correspondant à un format de transport fixé et la CQI choisie comme seconde valeur d'ajustement pour la puissance de transmission.

**11.** Procédé selon la revendication 1, **caractérisé en ce que** le procédé consiste en outre à :

choisir (501) une CQI parmi les CQI renvoyées par les terminaux en fonction d'une valeur de rapport cible, et ajuster (502) un format de transport et la puissance de transmission en fonction de la CQI choisie.

**12.** Procédé selon les revendications 9 ou 11, **caractérisé en ce que** choisir (501) la CQI parmi les CQI renvoyées par les terminaux en fonction d'une valeur de rapport cible consiste à :

trier, avec la station de base, les CQI renvoyées par les terminaux dans l'ordre décroissant en fonction de magnitudes de valeurs, et choisir la CQI avec le nombre d'indice de valeur d'arrondissement vers le bas du produit de la valeur de rapport cible et du nombre de toutes les CQI.

**13.** Station de base, **caractérisée en ce que** la station de base comprend :

une unité de réception capable de recevoir les informations d'indication renvoyées par les terminaux et envoyer les informations d'indication reçues ;
une unité d'ajustement capable de recevoir les informations d'indication envoyées de l'unité de réception, d'ajuster (405, 705) le schéma de modulation de liaison descendante en fonction des informations d'indication et d'envoyer le schéma de modulation de liaison descendante ajusté ; et
une unité de transmission capable de recevoir le schéma de modulation de liaison descendante ajusté depuis l'unité d'ajustement, de moduler les MBMS à transmettre en fonction du schéma de modulation de liaison descendante reçu, et d'envoyer (402, 702) les MBMS modulés aux terminaux ;
dans laquelle le schéma de modulation de liaison descendante comprend une puissance de transmission ; les informations d'indication comprennent des performances de réception de données, dans laquelle les performances de réception de données sont renvoyées)404, 704) périodiquement par les terminaux ; et l'unité d'ajustement comprend :

un premier module d'ajustement de puissance de transmission capable de déterminer (601) une satisfaction réelle des utilisateurs MBMS en fonction des performances de réception de données, dans lequel la satisfaction réelle des utilisateurs MBMS est le rapport entre le nombre d'indications si les données ont été reçues correctement et le nombre de toutes les indications, ou le rapport entre le nombre des indications si un utilisateur est satisfait de la réception et le nombre de toutes les indications, déterminer (602) une valeur d'ajustement pour la puissance de transmission en fonction du rapport entre le nombre d'indications si les données ont été reçues correctement et le nombre de toutes les indications ou en fonction du rapport entre le nombre des indications si un utilisateur est satisfait de la réception et le nombre de toutes les indications, et ajuster (603) la puissance de transmission en fonction de la valeur d'ajustement déterminée pour la puissance de transmission ;
dans lequel déterminer (602) une valeur d'ajustement consiste à : définir une valeur de rapport cible, une étape d'ajustement ascendante et une étape d'ajustement descendante à l'avance ; traiter la différence entre la dernière valeur d'ajustement et l'étape d'ajustement descendante comme la valeur d'ajustement courante si le rapport entre le nombre d'indications si les données ont été reçues correctement et le nombre de toutes les indications est supérieur à la valeur de rapport cible ; ou si le rapport entre le nombre des indications si un utilisateur est satisfait de la réception et le nombre de toutes les indications est supérieur à la valeur de rapport cible ; et traiter la somme de la dernière valeur d'ajustement et de l'étape d'ajustement montante comme la valeur d'ajustement courante si le rapport entre le nombre d'indications si les données ont été reçues correctement et le nombre de toutes les indications est inférieur à la valeur de rapport cible, la valeur initiale de la valeur d'ajustement étant zéro ; ou si le rapport entre le nombre des indications si un utilisateur est satisfait de la réception et le nombre de toutes les indications est inférieur à la valeur de rapport cible, la valeur initiale de la valeur d'ajustement étant zéro ; et
dans lequel l'ajustement (603) de la puissance de transmission consiste à : traiter la somme de la puissance de transmission courante et de la valeur d'ajustement pour la puissance de transmission comme la puissance de transmission ajustée.

**14.** Station de base selon la revendication 13, **caractérisée en ce que** les informations d'indication comprennent des CQI ; et l'unité d'ajustement comprend :
un second module d'ajustement de puissance de transmission capable de choisir la CQI qui permet d'obtenir la satisfaction cible des utilisateurs MBMS en fonction des CQI, déterminer une seconde valeur d'ajustement pour la puissance de transmission en fonction de la CQI choisie, et ajuster la puissance de transmission en fonction de la seconde valeur d'ajustement pour la puissance de transmission.

**15.** Station de base selon la revendication 14, **caractérisée en ce que** le schéma de modulation de liaison descendante comprend un format de transport ; et l'unité d'ajustement comprend :
un module d'ajustement du schéma de transport capable de choisir la CQI qui permet d'obtenir la satisfaction cible des utilisateurs MBMS en fonction des CQI, et ajuster le format de transport et la puissance de transmission en fonction de la CQI choisie.

**16.** Station de base selon la revendication 13, **caractérisée en ce que** le schéma de modulation de liaison descendante comprend un format de transport ; les informations d'indication comprennent des CQI ; et l'unité d'ajustement comprend :
un module d'ajustement de schéma de modulation capable de choisir la CQI qui permet d'obtenir la satisfaction cible des utilisateurs MBMS en fonction des CQI, et ajuster le format de transport et la puissance de transmission en fonction de la CQI choisie.

**17.** Système pour mettre en oeuvre un service de multidiffusion de diffusion multimédia, MBMS, **caractérisé en ce que** le système comprend une station de base selon l'une quelconque des revendications 13-16, et des terminaux capables de recevoir une MBMS et de renvoyer les informations d'indication.

Figure 1

Figure 2

Figure 3

The base station determines the transport format and transmission power of a downlink shared data channel of MBMS according to CQIs fed back by terminals

401

Transmit the MBMS to MBMS users over the downlink shared channel

402

The terminals receive the MBMS carried over the downlink shared channel

403

The terminals feed back data receiving performance

404

The base station adjusts the transmission power of the downlink shared data channel of the MBMS according to the data receiving performance fed back by the terminals

405

Figure 4

The base station selects a CQI that can achieve the target satisfactory of MBMS users according to the CQIs fed back by the terminals

501

Determine transport format and transmission power of a downlink shared data channel of MBMS according to the CQI selected

502

Figure 5

The base station determines the satisfaction of MBMS users according to the data receiving performance fed back by terminals

601

Determine the adjustment value for transmission power of a downlink shared data channel of MBMS according to the determined satisfaction of MBMS users

602

Adjust the transmission power of the downlink shared data channel of the MBMS according to the determined adjustment value for transmission power

603

## Figure 6

The base station determines the transport format and transmission power of a downlink shared data channel of MBMS according to the demand of the MBMS for transmission rate

701

Transmit the MBMS over the downlink shared channel to MBMS users

702

The terminals receive the MBMS carried over the downlink shared channel

703

The terminals feed back data receiving performance

704

The base station adjusts the transmission power of the downlink shared data channel of the MBMS according to the data receiving performance fed back by the terminals

705

## Figure 7

The base station selects a CQI that can meet target satisfaction of MBMS users
according to CQIs fed back by terminals

801

Determine the adjustment value for transmission power of a downlink shared data
channel of MBMS according to the CQI selected

802

Adjust transmission power of the downlink shared data channel of the MBMS
according to the determined adjustment value for transmission power

803

Figure 8

**REFERENCES CITED IN THE DESCRIPTION**

**Patent documents cited in the description**

- US 2005113099 A1
- WO 03096149 A

- US 20050075124 A1